# EUROPEAN PATENT SPECIFICATION

(11) **EP 2 122 257 B1**
(45) Date of publication and mention of the grant of the patent: **26.04.2017**
(21) Application number: 08710069.9
(22) Date of filing: 16.02.2008
(51) Int. Cl.: F24D 12/02, F24D 7/00, F24D 10/00

(54) **CO2 BASED DISTRICT ENERGY SYSTEM**
CO2-BASIERTES Fernwärmesystem
SYSTÈME D'ÉNERGIE DE QUARTIER À BASE DE CO2

(30) Priority: 19.02.2007 US 890501 P
(43) Date of publication of application: 25.11.2009
(73) Proprietor: Ecole Polytechnique Fédérale de Lausanne (EPFL), 1015 Lausanne (CH)
(72) Inventor: FAVRAT, Daniel, CH-1066 Epalinges (CH); WEBER, Céline, CH-1260 Nyon (CH)
(74) Representative: Grosfillier, Philippe
(86) International application number: PCT/IB2008/050573
(87) International publication number: WO 2008/102292

(56) References cited:
- DE-A1- 2 649 726

## Description

### Field of invention

The present invention relates to district energy systems which are converting energy and delivering energy services (e.g. heating, hot water, cooling and electricity) to buildings at various locations, using renewable energy sources, as well as waste heat, and making use of synergies between buildings.

### State of the art

District energy systems produce steam, hot water or chilled water at a central plant and then pipe that water out to buildings in the district for space heating, domestic hot water heating and air conditioning. Individual buildings don't need their own boilers or furnaces, chillers or air conditioners. A district energy system does that work for them.

### General description of the invention

One object of the present invention is to offer a valuable alternative to existing district energy systems.

Another object is to reduce the space required to implement the pipes in the ground or in underground channels.

Another object is to solve the safety issues linked with possible leakage problems when implementing water pipes in underground channels including electrical or telecommunication wires.

Another object is to enhance the energetic and exergetic efficiencies of district energy systems.

Another object is make use of the latent heat of the transfer medium instead of the specific heat.

Another object is to have a CO2 "reservoir" from which CO2 can be extracted (fire extinction) or stored (fuel cell).

The above objects are solved in accordance with the invention by a district energy system characterized by the use of CO₂ as energy transfer medium.

Preferred embodiments of the invention are defined in the claims.

The present invention offers several advantages, in particular :
a) Unlike conventional district heating/cooling systems, the thermodynamic state of the working fluid, CO₂, is not defined only at a central heating/cooling plant, but also directly at the customer's place when requested with decentralized compressor units, heat pumps, expansion valves, condensers and evporators. The thermodynamic state of the CO₂ can thus be directly adjusted following the specific requirements of each building, thereby minimizing energy losses.
b) Unlike conventional district heating/cooling systems having one working fluid for the heat-pump for instance at the central heating/cooling plant, and another working fluid in the pipes of the network, in the case described here there is only one working fluid for the whole system, thus minimizing energy losses in additional heat-exchangers.
c) When combining different modes at the customer's place (see below), because of the internal recirculation of the CO₂ at the customer's place, a direct energy transfer takes place between the heating and the air-conditioning requirements (or vice-versa), so that the CO₂ that is being pumped between the heating/cooling plant and the customer is kept to a minimum.
d) Only two pipes are required to meet all the different possible energy service requirements, when in conventional systems four (or at best three) pipes are required to provide the same services.
e) The network can be used for districts or cities, but also in industrial plants.

### Detailed description of the invention

The invention will be better understood below with a detailed description illustrated by a figure which schematically represents a district heating/cooling energy system according to the invention.

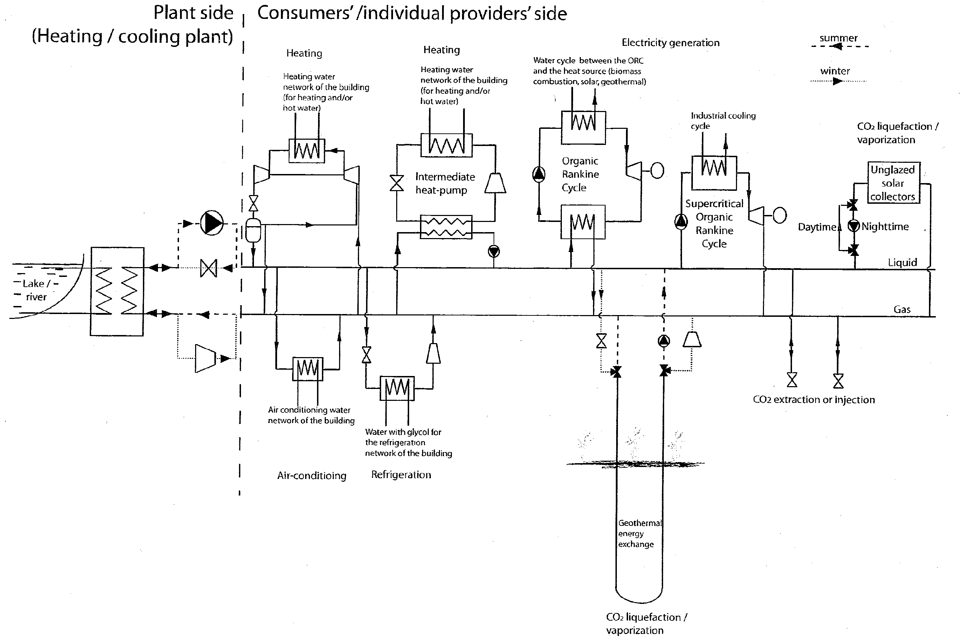

The network comprises two main pipes: one main pipe containing liquid CO₂ (upper pipe in the figure) and one main pipe containing gaseous CO₂ (bottom pipe in the figure). Both pipes are preferably at a similar pressure, advantageously however with a slightly higher pressure in the liquid pipe to avoid the need of a pump when liquid is evaporated for air-conditioning and the vapor directly fed back to the gaseous line. One preferred pressure level is a pressure corresponding to a saturation temperature of CO₂ of 18°C. Lower temperatures, of 15°C or 16° for instance, may be chosen.

At the district heating/cooling plant the pipes are connected to a heat-exchanger working either as evaporator in heating mode (winter) or as condenser in cooling mode (summer). A set of valves at the central plant couple the evaporator with an expansion valve and a compressor in the heating mode and the condenser with a pump in the cooling mode. When dealing with a district located near a lake, a river, or a waste water treatment facility, the available water can serve as heat source (heating mode) or heat sink (cooling mode). However, any other heat source such as solar energy, geothermal energy, seasonal heat storage, waste incineration... could also be used, directly in the heating mode, or over an absorption chiller in the cooling mode. To compensate pressure losses in the pipes and avoid parasitic boiling, intermediate small circulation pumps may be implemented along the network.

Unlike conventional district heating/cooling systems having dedicated supply and return pipes, with the system described here the direction of the flow in the pipes depends on the ratio of the heating (and/or hot water) and cooling (and/or freezing) requirements. If the total heating (and/or hot water) requirements in the district exceed the total cooling (and/or freezing) requirements, the gaseous pipe is the supply pipe and the liquid pipe the return pipe. In this case, the CO₂ is evaporated at the central plant and pumped to the customers. On the other hand, if the total cooling (and/or freezing) requirements in the district exceed the total heating (and/or hot water) requirements, the liquid pipe becomes the supply pipe and the gaseous pipe the return pipe. In this case, the CO₂ is condensed at the central plant before being pumped to the customers.

At the user's location, following processes can take place : heating, hot water preparation, air-conditioning and refrigeration. Besides, assuming that another heat source is available at some location along the network (heat from a chemical industry for instance), the CO₂ network can operate as a heat sink for an ORC. In case geothermal collectors are available or possible (under green areas for example), gaseous CO₂ can be generated in winter by means of a heat pump, and CO₂ liquefaction could take place in summer, when the air-conditioning requirements are predominant. Finally, if unglazed solar roofs are installed, CO₂ could be circulated through the solar panels in winter for instance, if the sun is shining, in order to generate additional gaseous CO₂ to meet the heating and hot water requirements. In summer, at night, CO₂ can be liquefied if the atmospheric temperature is below 18° C. In order to compare this CO₂ system with the conventional district energy systems operating with water, the heating, hot water and cooling processes are explained below . The "liquid" and "gas" pipes in the figure always refer to the pipes connecting the end user with the heating/cooling plant.

### 1. Heating and hot water (open CO₂ heat pump)

In the heating mode, the gaseous CO₂ is compressed according to the specific needs (temperature level) of the building. It then passes through the heat-exchanger where it releases its energy to the building heating network, before being circulated through an expansion turbine (if any mechanical energy can be recovered), an expansion valve and a separator. The liquid phase is sent to the liquid CO₂ pipe. The gaseous phase is directly recirculated to the compressor. If the heating requirements decrease, thus diminishing the needs for CO₂ in the gaseous phase, the gaseous CO₂ can be circulated directly from the separator back to the gaseous CO₂ pipe. This mode is specially advantageous for the hot water preparation.

### 2. Heating and hot water with a closed loop heat pump

A conventional heat pump can be used as superposed cycle in particular when the heating temperature glide is small and disadvantageous for a supercritical CO₂ cycle.

### 3. Air conditioning

In the air conditioning mode, liquid CO₂ is circulated from the liquid pipe, via the heat-exchanger where it is evaporated with the heat coming from the building, to the gaseous pipe. Due to the slight over-pressure in the liquid pipe compared to the gaseous pipe, no pump is required in the cooling mode.

### 4. Refrigeration

In the refrigeration mode, liquid CO₂ is circulated over an expansion valve to the heat-exchanger where it serves as heat-sink to the refrigeration network of the building (for industrial refrigeration for instance). The expansion valve can be regulated so as to meet the exact refrigeration temperature required by the building. After the heat-exchanger, the CO₂ is compressed and sent back to the gaseous line.

### 5. Electricity generation

If a heat-source with a high enough temperature is available somewhere along the CO₂ network, the network can operate as a heat-sink for an ORC (conventional or supercritical) and thereby generate some electricity.

### 6. Geothermy

In cities and districts with big green parks, geothermal probes can be dug into the soil. In winter, geothermal heat could be used to evaporate liquid CO₂ using a heat-pump, and therefore help providing the required CO₂ for heating and hot water purposes. On the other hand, in summer, gaseous CO₂ can be liquified (mainly in the nighttime) in order to have enough liquid CO₂ for the air-conditioning during the day. Geothermal energy can also be gained by means of geothermal structures implemented in the foundations of large multistorey car parks.

### 7. Unglazed solar collectors

Unglazed solar collectors mounted on the roof of buildings can help generate gaseous CO₂. During the nighttime, especially in summer, if the atmospheric temperature is below 18° C, the existing heat-exchanger can be used to liquefy gaseous CO₂ for the daytime air-conditioning.

### 8. Fire extinction

The CO₂ contained in the network can be used for fire extinction purposes if needed.

### 9. CO₂ collection

The network can be used to collect and transport CO₂ from fuel cell or other decentralized cogeneration units.

### 10. Combination

The operating modes described above can also be combined. For instance the heating and air-conditioning modes can be combined at the customer's place. When both heating and air-conditioning are required in the same building, this system directly transfers the energy from the evaporator (air-conditioning) to the heat-exchanger (heating and/or hot water) or vice-versa via the CO₂. When one of the two energy requirements exceeds the other, the CO₂ that cannot be reused internally at the customer's place is circulated via the heating/cooling plant.

In the heating mode, the gaseous CO₂ is compressed according to the specific needs (temperature level) of the building, as described above (point 1). After having passed through the heat-exchanger, expansion turbine, expansion valve and separator, the liquid can be circulated directly to the evaporator together with any additional liquid CO₂ from the pipe of the network, if cooling is required in the building. The vapor on the other hand either flows back to the compressor, or, if the heating (and/or hot water) requirements decrease, to the gaseous pipe. Likewise, the CO₂ evaporated in the evaporator (cooling mode) can be circulated to the compressor for heating (and/or hot water) requirements, via a separator to insure the vapor quality, or back to the gaseous pipe.

## Claims

1. District energy system comprising a pipe system, end user's locations and an optional plant for transferring CO₂ as energy transfer medium between said end user's locations and/or between said optional plant and said end user's locations; it comprises two main pipes extending between said end user's locations and/or between said optional plant and said end user's locations, the first main pipe containing CO₂ in liquid state and the second main pipe containing CO₂ in gaseous state, **characterized in that** both pipes being adapted in a way as to each act as a supply pipe or as a return pipe, depending on the heating or the cooling requirements of said end user's locations.

2. District energy system according to claim 1 including at least one energy transformer, said transformer having one inlet communicating with one of said two main pipes and one outlet communication with the other one of said two main pipes.

3. District energy system according to anyone of the previous claims wherein at least one end user location comprise one or several outlets, e.g. valves, which are adapted for fire extinguishing.

4. District energy system according to anyone of the previous claims wherein at least one end user location comprise one or several inlets which are adapted for bringing external CO₂ into said district energy system.

5. District energy system according to anyone of the previous claims wherein the pressure level in both main pipes is very similar, the pressure in the first main pipe being slightly higher than the pressure in the second main pipe.

6. District energy system according to anyone of the previous claims wherein the pressure level in both main pipes is the pressure corresponding to a CO₂ saturation temperature in the range of 15°C to 18°C.

7. Use of a district energy system as defined in anyone of the previous claims **characterized by** the fact that, when the heating requirements are higher than the cooling requirements (e.g. in winter), said second main pipe is used as supply pipe and when the cooling requirements are higher than the heating requirements (e.g. in summer), said first main pipe is used as supply pipe.

8. Use of a district energy system according to claim 7 including at least one heat-exchanger for providing heating or hot water wherein gaseous CO₂ follows a circuit in which it is successively compressed and passed through said heat-exchanger, an expansion valve and a separator, the resulting CO₂ liquid phase being sent to said first main pipe and the remaining gaseous CO₂ being redirected in said circuit.

## Patentansprüche

1. Fernwärmesystem, umfassend ein Leitungssystem, Endverbraucherstandorte und eine optionale Anlage zum Übertragen von CO₂ als Energieübertragungsmedium zwischen den Endverbraucherstandorten und/oder zwischen der optionalen Anlage und den Endverbraucherstandorten;
das zwei Hauptleitungen umfasst, die sich zwischen den Endverbraucherstandorten und/oder zwischen der optionalen Anlage und den Endverbraucherstandorten erstrecken, wobei die erste Hauptleitung CO₂ in flüssigem Zustand enthält und die zweite Hauptleitung CO₂ in gasförmigem Zustand enthält, **dadurch gekennzeichnet, dass**
beide Leitungen derart ausgelegt sind, dass sie jeweils als Vorlaufleitung oder als Rücklaufleitung fungieren können, abhängig von den Heiz- oder Kühlanforderungen der Endverbraucherstandorte.

2. Fernwärmesystem gemäß Anspruch 1, das wenigstens einen Energiewandler aufweist, wobei der Wandler einen Einlass besitzt, der mit einer der beiden Hauptleitungen in Kommunikationsverbindung steht, und einen Auslass, der mit der anderen der beiden Hauptleitungen in Kommunikationsverbindung steht.

3. Fernwärmesystem gemäß einem der vorstehenden Ansprüche, wobei wenigstens ein Endverbraucherstandort einen oder mehrere Auslässe umfasst, z. B. Ventile, die für Feuerlöschzwecke ausgelegt sind.

4. Fernwärmesystem gemäß einem der vorstehenden Ansprüche, wobei wenigstens ein Endverbraucherstandort einen oder mehrere Einlässe umfasst, die zum Einbringen von externem CO₂ in das Fernwärmesystem ausgelegt sind.

5. Fernwärmesystem gemäß einem der vorstehenden Ansprüche, wobei das Druckniveau in beiden Hauptleitungen sehr ähnlich ist, wobei der Druck in der ersten Hauptleitung geringfügig höher ist als der Druck in der zweiten Hauptleitung.

6. Fernwärmesystem gemäß einem der vorstehenden Ansprüche, wobei das Druckniveau in beiden Hauptleitungen der Druck ist, der einer CO₂-Sättigungstemperatur im Bereich von 15 °C bis 18 °C entspricht.

7. Verwendung eines Fernwärmesystems gemäß Definition in einem der vorstehenden Ansprüche, **gekennzeichnet durch** die Tatsache, dass, wenn die Heizanforderungen höher sind als die Kühlanforderungen (z. B. im Winter), die zweite Hauptleitung als Vorlaufleitung verwendet wird, und wenn die Kühlanforderungen höher sind als die Heizanforderungen (z. B. im Sommer), die erste Hauptleitung als Vorlaufleitung verwendet wird.

8. Verwendung eines Fernwärmesystems gemäß Anspruch 7, das wenigstens einen Wärmetauscher zum Bereitstellen von Heizwärme oder Warmwasser aufweist, wobei gasförmiges CO₂ einen Kreislauf durchläuft, in dem es nacheinander verdichtet und durch den Wärmetauscher, ein Expansionsventil und ein Trennelement geführt wird, wobei die resultierende flüssige Phase des CO₂ in die erste Hauptleitung eingespeist wird und das verbleibende gasförmige CO₂ in den Kreislauf zurückgeführt wird.

## Revendications

1. Système d'énergie de quartier comprenant un système de tuyaux, des emplacements d'utilisateur final et une installation optionnelle pour transférer du CO₂ comme support de transfert d'énergie entre lesdits emplacements d'utilisateur final et/ou entre ladite installation optionnelle et lesdits emplacements d'utilisateur final; comprenant deux tuyaux principaux qui s'étendent entre lesdits emplacements d'utilisateur final et/ou entre ladite installation optionnelle et lesdits emplacements d'utilisateur final, le premier tuyau principal contenant du CO₂ à l'état liquide et le second tuyau principal contenant du CO₂ à l'état gazeux,
**caractérisé en ce que** les deux tuyaux sont aptes à agir chacun à la manière d'un tuyau d'alimentation ou d'un tuyau de retour, en fonction des exigences de chauffage ou de refroidissement desdits emplacements d'utilisateur final.

2. Système d'énergie de quartier selon la revendication 1, comprenant au moins un transformateur d'énergie, ledit transformateur présentant une entrée qui communique avec l'un desdits deux tuyaux principaux et une sortie qui communique avec l'autre desdits deux tuyaux principaux.

3. Système d'énergie de quartier selon l'une quelconque des revendications précédentes, dans lequel au moins un emplacement d'utilisateur final comprend une ou plusieurs sorties, par exemple des vannes, qui sont aptes à éteindre un feu.

4. Système d'énergie de quartier selon l'une quelconque des revendications précédentes, dans lequel au moins un emplacement d'utilisateur final comprend une ou plusieurs entrées, qui sont aptes à amener du CO₂ externe dans ledit système d'énergie de quartier.

5. Système d'énergie de quartier selon l'une quelconque des revendications précédentes, dans lequel le niveau de pression dans les deux tuyaux principaux est très similaire, la pression dans le premier tuyau principal étant légèrement plus élevée que la pression dans ledit second tuyau principal.

6. Système d'énergie de quartier selon l'une quelconque des revendications précédentes, dans lequel le niveau de pression dans les deux tuyaux principaux est la pression qui correspond à une température de saturation en CO₂ dans la plage de 15°C à 18°C.

7. Utilisation d'un système d'énergie de quartier selon l'une quelconque des revendications précédentes, **caractérisée par le fait que**, lorsque les exigences de chauffage sont plus élevées que les exigences de refroidissement (par exemple en hiver), ledit second tuyau principal est utilisé comme tuyau d'alimentation, et lorsque les exigences de refroidissement sont plus élevées que les exigences de chauffage (par exemple en été), ledit premier tuyau principal est utilisé comme tuyau d'alimentation.

8. Utilisation d'un système d'énergie de quartier selon la revendication 7, comprenant au moins un échangeur de chaleur pour fournir du chauffage ou de l'eau chaude, dans lequel le CO₂ gazeux suit un circuit dans lequel il est successivement comprimé et passé à travers ledit échangeur de chaleur, une soupape d'expansion et un séparateur, la phase liquide de CO₂ qui en résulte étant envoyée audit premier tuyau principal et le CO₂ gazeux restant étant redirigé dans ledit circuit.
